# EUROPEAN PATENT APPLICATION

(11) **EP 4 342 417 A1**
(43) Date of publication of application: **27.03.2024**
(21) Application number: 22804837.7
(22) Date of filing: 08.04.2022
(51) Int. Cl.: A61C 8/00

(54) **DENTAL SOLID-TYPE ABUTMENT**

(30) Priority: 21.05.2021 KR 20210065446
(71) Applicant: Jang, Hyun Seong, Ansan-si, Gyeonggi-do 15484 (KR)
(72) Inventor: Jang, Hyun Seong, Ansan-si, Gyeonggi-do 15484 (KR)
(74) Representative: Cabinet Chaillot
(86) International application number: PCT/KR2022/005123
(87) International publication number: WO 2022/244982

(57) **Abstract**

The present invention relates to a dental solid abutment integrally formed with a screw for being fixed to a fixture, and specifically, to a dental solid abutment in which a tool hole (a driver hole), to which a tool (a driver) used for being engaged to the fixture through a screw integrally formed on the abutment is engaged, is formed inside a post or a cuff below a functional part so as not to interfere with the functional part formed to add various functions to the post, so that a common driver can be used as it is while adding various functions to the post, and thus a production cost can be reduced and an implant treatment can be easily performed.

## Description

### [Technical Field]

The present invention relates to a dental solid abutment integrally formed with a screw for being fixed to a fixture, and specifically, to a dental solid abutment in which a tool hole (a driver hole), to which a tool (a driver) used for being engaged to the fixture through a screw integrally formed on the abutment is engaged, is formed inside a post or a cuff below a functional part so as not to interfere with the functional part formed to add various functions to the post, so that a common driver can be used as it is while adding various functions to the post, and thus a production cost can be reduced and an implant treatment can be easily performed.

### [Background Art]

In general, dental implants refer to artificial teeth formed by implanting artificial dental roots in a site where teeth are partially or wholly lost, and fixing a dental prosthesis or crown to the artificial dental roots, or such a dental surgery.

Such an implant includes a fixture implanted in an alveolar bone of a maxillary anterior, and an abutment engaged and fixed to the fixture. The abutment includes a fixing part engaged to the fixture, a cuff integrally formed on the upper part of the fixing part and covered with gums, and a post which is formed on the upper part of the cuff and to which the dental prosthesis is connected.

The abutment is usually engaged and fixed to the fixture in a screw engaging manner using a screw or in an interference fit manner. In the case of the screw engaging manner using a screw, it may be classified into a two-piece abutment in which the screw is separated from the fixing part and a solid type abutment in which the screw is integrated with the fixing part.

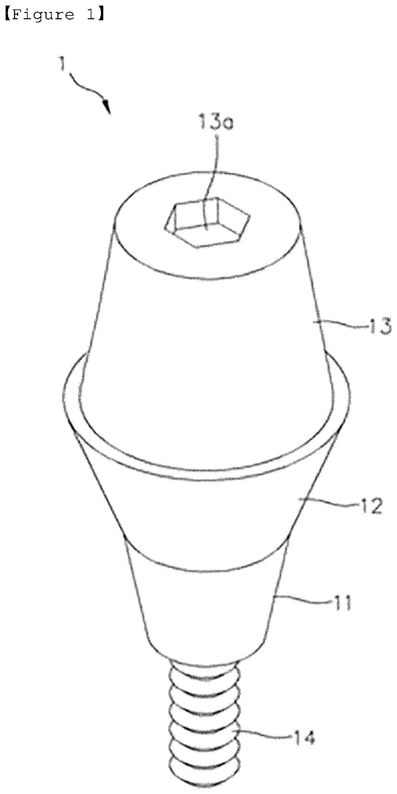

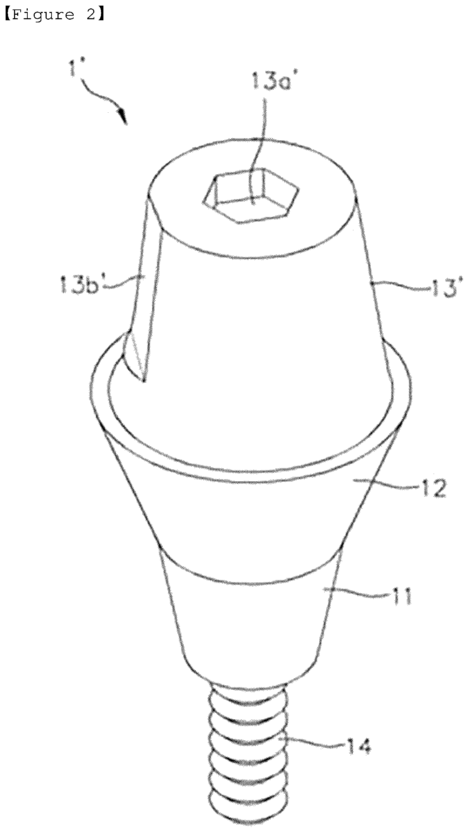

FIG. 1 is a perspective view for explaining an example of a solid abutment according to the related art, and FIG. 2 is a perspective view showing another example of a solid abutment according to the related art.

Referring to FIGS. 1 and 2, square tool hole (driver holes) 13a and 13a', to which a tool is engaged, are formed on top of the posts 13 and 13' or a tool groove 13b' is formed on an outer surface to couple solid abutments 1 and 1' to the fixture using a tool such as a screwdriver.

The tool holes 13a and 13a' to which the tools are engaged are formed in a rectangular shape so that the driver tool is inserted and engaged, for example, the tool holes 13a and 13a' can be hexa-driver holes, and are formed on top of the posts 13 and 13 corresponding to the occlusal surface of the teeth. The tool groove 13b' is formed on an upper end surface of the cuff 2, that is, on an outer surface to extend from a lower end surface to the upper end surface of the post 13' .

Such solid abutments 1 and 1' are engaged to the fixture by inserting a tool into the tool hole 13a while aligning the screw 14 integrally formed with the fixing part 11 with the fixture, and then rotating the solid abutment 1 in one direction (a tightening direction), or are engaged and fixed by wrapping the tool groove 13b' formed in the post 13' using a specially manufactured tool and then rotating it.

On the other hand, in recent years, in order to solve various problems due to the use of adhesives, in Korean registration patent No. 10-2099062 etc., when engaging and fixing the dental prostheses housed in the posts, they are fixed using an interference fit or another screw, without suing adhesives.

In this way, in the related art, various processed parts (hereinafter referred to as functional parts) are formed by processing the post to add various functions to the post of the abutment. At this time, the functional part may be made up of various types of groove structures formed on the outer surface of the post, a groove structure in which a screw thread is formed inside the upper center of the post, a split structure in which the upper end portion of the post is cut and divided, and the like.

However, in the solid abutment 1 according to the related art, since the post 13 is formed with the tool hole 13a for engagement with a tool, there is a limitation in forming the functional part on the post 13. That is, when forming functional parts of various forms on the post 13, there was a problem that they intrude the tool holes 13a formed in the post 13 and the functions of the tool holes 13a are lost.

In order to prevent the loss of function of the tool hole 13a formed on the post 13, as shown in FIG. 2, a manner is used in which a tool groove 13b' having a square structure is formed on the outer surface of the post 13' , a special driver capable of wrapping the outer surface of the post 13' is manufactured to rotate and engage the solid abutment 1', while wrapping the outer surface of the post 13'.

However, such a manner has a problem that is cumbersome and generates addition costs because there is a need to manufacture a special driver customized for each thickness or length of the post 13'. In addition, there is a limitation because adjacent teeth interfere with the special driver in small mouth teeth and mandibular anterior teeth having a narrow mesiodistal dimension, and impede the application of the special driver. That is, there was a problem that a special driver cannot be applied depending on the implant treatment site.

### [Disclosure]

### [Technical Problem]

Therefore, the present invention has been proposed to solve the problems of the related art, and an object thereof is to provide a dental solid abutment which can use a common driver that is commonly used as it is while, allowing addition of various functions to the post, without using the specially manufactured driver applied in the related art.

### [Technical Solution]

A dental solid abutment according to the present invention for achieving the above object includes a fixing part that is integrally formed with a screw at a lower part and is inserted and fixed inside a fixture via the screw; a cuff that is formed on top of the fixing part and covered with gum; and a post that is formed on top of the cuff, and inside of an upper center has a first functional part formed of a threaded groove formed with a thread on an inner peripheral surface for screwing an upper structure to improve an engagement force with a dental prosthesis housed at an upper part, in which a tool hole, to which a tool for rotating the fixing part is engaged, is formed in any one part of inside of the post, inside of the cuff, or between the post and the cuff, the tool hole being formed below the first functional part to communicate with the first functional part.

Also, the first function part may have a structure in which an upper part of the post is cut and divided into a plurality of pieces.

In addition, a second functional part having a hole structure communicating with the first functional part may be further formed on an outer surface of the post.

Further, the tool hole may be formed below the first functional part and the second functional part, when the second functional part has a hole structure.

Also, the tool hole may have a hexagonal, cross or star-shaped structure, and may be formed to be spaced apart from a lower end portion of the first functional part by 1 mm to 2 mm.

### [Advantageous Effects]

As described above, according to the dental solid abutment of the present invention, a tool hole, to which a tool used for being engaged to a fixture through an integrally formed screw is engaged, is formed on a post, a cuff or between the post and the cuff below a functional part so as not to interfere with the functional part formed to add various functions to the post, so that a common driver can be used as it is while adding various functions to the post, and thus a production cost can be reduced and an implant treatment can be easily performed.

### [Description of Drawings]

FIG. 1 is a perspective view showing an example of a solid abutment according to a related art.
FIG. 2 is a perspective view showing another example of the solid abutment according to the related art.
FIG. 3 is a perspective view showing an example of a dental solid abutment according to an embodiment of the present invention.
FIG. 4 is a cross-sectional view of the dental solid abutment shown in FIG. 3.
FIG. 5 is an exploded perspective view showing a process of engaging an upper structure to the post shown in FIG. 3.
FIG. 6 is a cross-sectional view of a state in which a dental prosthesis is housed on the top of the post shown in FIG. 3.
FIG. 7 is a perspective view showing another example of the dental solid abutment according to an embodiment of the present invention.
FIG. 8 is a cross-sectional view showing the dental solid abutment shown in FIG. 7.
FIG. 9 is an exploded perspective view showing the process of engaging a bolt to the post shown in FIG. 7.
FIG. 10 is a cross-sectional view of a state in which a dental prosthesis is housed on the top of the post shown in FIG. 7.

### [Best Mode]

Same reference numerals refer to same constituent elements throughout the specification, and the terms used is for the purpose of describing embodiments and is not intended to limit the present invention. Unless otherwise defined, all terms (including technical and scientific terms) used herein may be used in the meaning of being commonly understood by those having an ordinary skill in the art to which the present invention belongs. Also, terms commonly used and defined in dictionaries should not be interpreted ideally or unduly unless defined.

In a dental solid abutment according to the present invention, a tool hole (a driver hole), to which a tool (a driver) used for being engaged to the fixture through a screw integrally formed on the abutment is engaged, is formed below a functional part so as not to interfere with the functional part formed to add various functions to the post. At this time, the functional part may have various forms of groove or hole structures formed on an outer surface of the post with a certain depth, groove or hole structure with threads formed on an inner peripheral surface to screw a separate upper structure into inside of an upper center of the post, or a divided structure in which an upper part of the post is cut and divided from an upper end surface.

Hereinafter, technical features of the present invention will be specifically described with reference to the accompanying drawings.

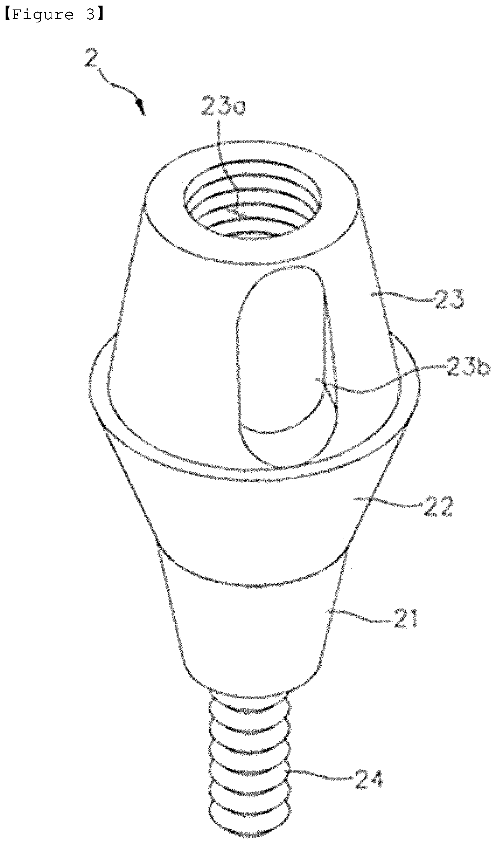

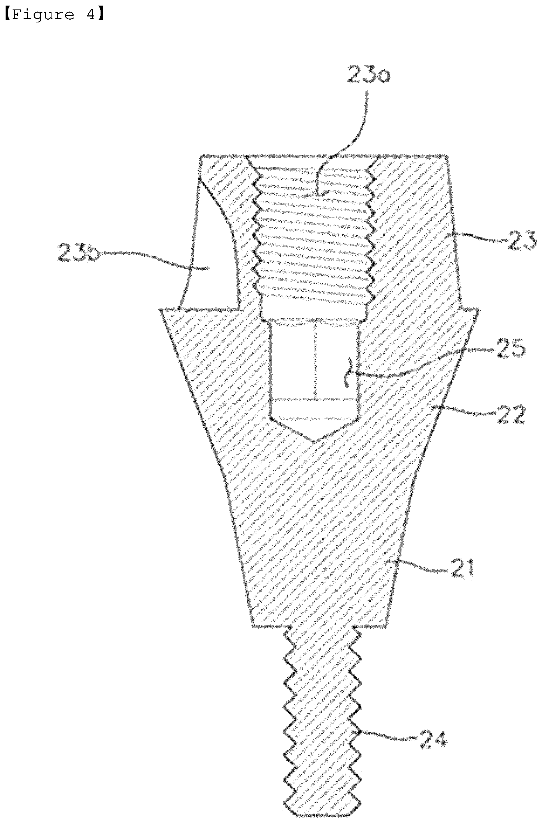

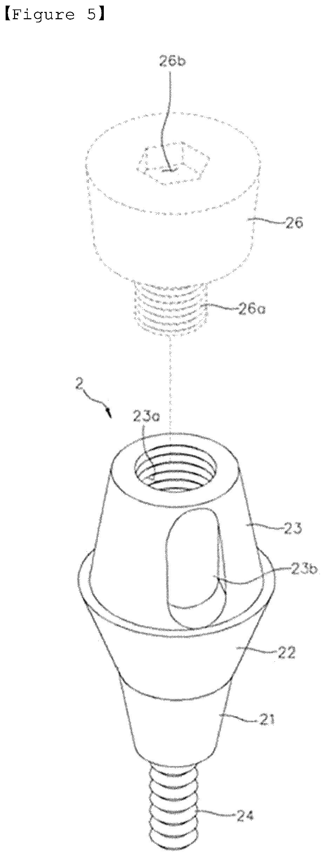

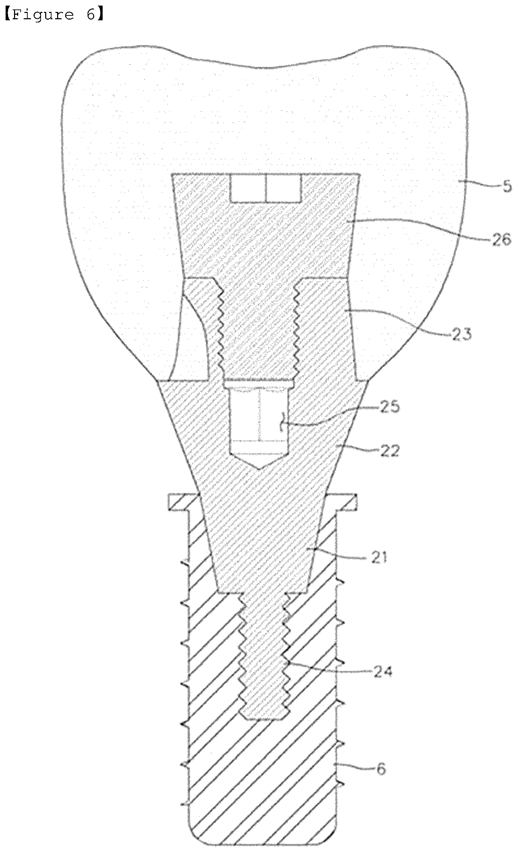

FIG. 3 is a perspective view showing an example of a dental solid abutment according to an embodiment of the present invention, FIG. 4 is a cross-sectional view of the dental solid abutment shown in FIG. 3, FIG. 5 is an exploded perspective view showing a process of engaging an upper structure to the post shown in FIG. 3, and FIG. 6 is a cross-sectional view of a state in which a dental prosthesis is housed on the top of the post shown in FIG. 3.

Referring to FIGS. 3 to 6, a dental solid abutment 2 according to the embodiment of the present invention includes a fixing part 21 which has a screw 24 integrally formed at a lower part and is screwed into a fixture 6 through the screw 24, a cuff 22 which is integrally formed on the upper part of the fixing part 21 and covered with gums, and a post 23 which is formed on the upper part of the cuff 22 and to which a dental prosthesis 5 is engaged.

In order to add various functions, a first functional part 23a made up of a threaded groove, into which an upper structure 26 as shown in FIG. 5 is screwed, is formed at the upper center of the post 23.

The upper structure 26 is for maximizing an engagement force with the dental prosthesis without using an adhesive, is screwed into the first functional part 23a through a screw 26a formed in a lower part, and a hexagonal tool hole 26b to which a tool is engaged can be formed at an upper center thereof.

In addition, a second functional part 23b having a groove or hole structure for engagement force with the dental prosthesis housed in the post 23 can be further formed on the outer surface of the post 23. At this time, the shape and size of the second functional part 23b are not limited. For example, as shown in FIG. 3, it may have a groove extending upward from the upper surface of the cuff 22 or a hole structure communicating with the center.

Further, as shown in FIG. 4, a tool hole 25 may be formed in the central inside of the post 23 or the central inside of the cuff 22 to communicate with the first functional part 23a below the first functional part 23a.

The tool hole 25 is a driver hole to which a tool (a driver) used for engaging and fixing the solid abutment 2 to the fixture via the screw 24 is engaged. At this time, the tool hole 25 may have a hexagonal structure, and its size is not limited. For example, the tool hole 25 can be formed with 1.2 hexa or 1.0 hexa, which are commonly used in dentistry, and can be formed with structures such as crosses or stars in addition to hexagonal structure.

As in FIGS. 3 and 4, the tool hole 25 formed in the post 23 or the cuff 22 below the first functional part 23a is formed below the lower end portion of the second functional part 23b. However, it is an example, and the tool hole 25 can be formed at a position higher than the lower end portion of the second functional part 23b.

Since the second functional part 23b is formed on the outer surface of the post 23 as a groove structure, the second functional part 23b does not interfere with the tool hole 25 formed inside the center of the post 23 or the cuff 22.

Therefore, since the tool hole 25 does not affect the second functional part 23b, it can be formed inside the center of the solid abutment 2, regardless of the position at which the second functional part 23b is formed.

For example, if the second functional part 23b is formed as a hole structure to communicate with the tool hole 25, the tool hole 25 may enter the region in which the second functional part 23b is formed and exert an influence. In this way, when forming the tool hole 25, if the tool hole 25 interferes with and affects the second functional part 23b, the tool hole 25 is formed below not only the first functional part 23a but also the second functional part 23b.

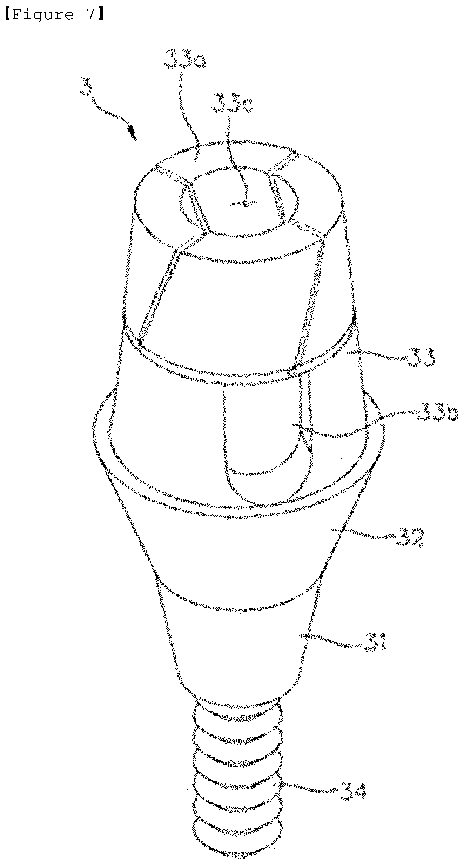

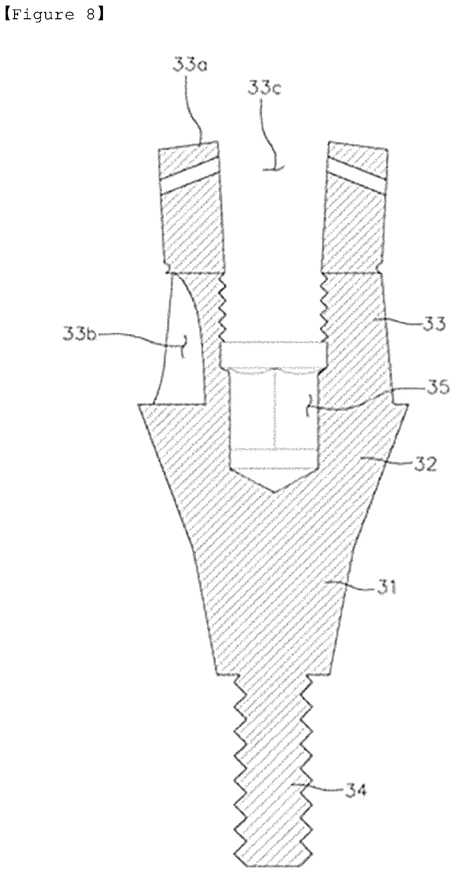

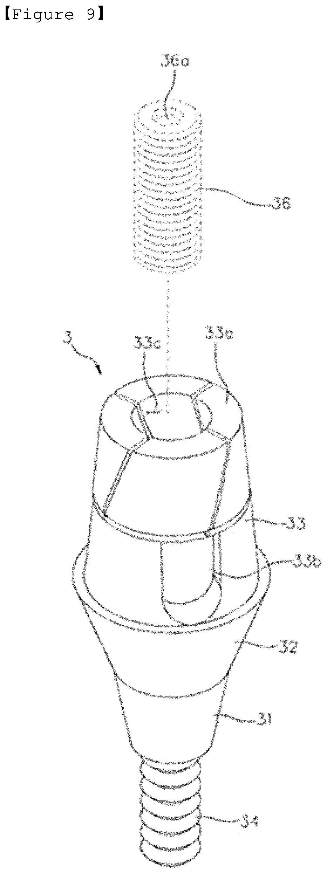

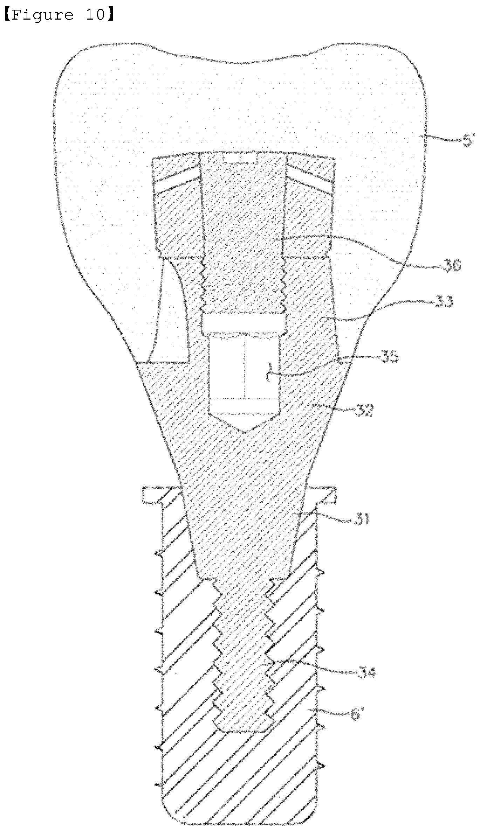

FIG. 7 is a perspective view showing another example of the dental solid abutment according to one embodiment of the present invention, FIG. 8 is a cross-sectional view showing the dental solid abutment shown in FIG. 7, FIG. 9 is an exploded perspective view showing the process of engaging a bolt to the post shown in FIG. 7, and FIG. 10 is a cross-sectional view of a state in which a dental prosthesis is housed on the top of the post shown in FIG. 7.

Referring to FIGS. 6 to 10, a dental solid abutment 3 according to an embodiment of the present invention includes a fixing part 31 which is integrally formed with a screw 34 and screwed after inserted inside the fixture 6', and a cuff 32 and a post 33 integrally formed with the fixing part 31.

The post 33 includes a first function part 33a cut and divided into a plurality of pieces in an upper part to extend outward by a bolt 36 inserted and screwed into a hollow 33c, and a second functional part 33b having a groove structure formed at a constant depth on a lower outer surface.

The bolt 36 is an upper structure and is formed with a hexagonal tool hole 36a. When a tool is engaged with the tool hole 36a, and then is screwed into the thread formed on the inner peripheral surface of the hollow 33c of the post 33, the first functional part 33a divided by the outer diameter of the bolt 36 is pushed outward and expanded.

As shown in FIG. 10, when the bolt 36 is screwed onto the post 33 and the first functional part 33a is pushed outward, the outer diameter of the post 33 is enlarged and the dental prosthesis 5' is housed thereon, it is possible to enhance the engagement force with the dental prosthesis 5' due to the expanded post 33.

The first functional part 33a communicates with the hollow 33c by having a divided structure in which the upper part of the post 33 is cut into a plurality of pieces. Therefore, the tool hole 35 to which the tool is engaged is formed to be positioned below the first functional part 33a so as not to interfere with the first functional part 33a.

In this way, in the dental solid abutment according to the embodiment of the present invention, the tool hole to which a tool (a driver) is engaged is formed below the functional part so as not to interfere with functional parts having various structures and sizes formed on the post to add functions to the post. That is, the tool hole may be formed on the lower side of the functional part on the post, the cuff, or between the post and the cuff, and may be formed to be spaced apart downward by 1 mm to 2 mm from the lower end portion of the functional part.

The structure and size of the functional part may be variously formed depending on the thickness and size of the solid abutment. The tool hole is formed below the functional part, and the shape and size can also be formed variously depending on the thickness and size of the solid abutment.

Various modifications and variations may be made without departing from the spirit and scope of the invention. Accordingly, the appended claims shall include such modifications or variations insofar as they fall within the spirit of the present invention.

## Claims

1. A dental solid abutment, comprising:
a fixing part that is integrally formed with a screw at a lower part and is inserted and fixed inside a fixture via the screw;
a cuff that is formed on top of the fixing part and covered with gum; and
a post that is formed on top of the cuff, and inside of an upper center has a first functional part formed of a threaded groove formed with a thread on an inner peripheral surface for screwing an upper structure to improve an engagement force with a dental prosthesis housed at an upper part,
wherein a tool hole, to which a tool for rotating the fixing part is engaged, is formed in any one part of inside of the post, inside of the cuff, or between the post and the cuff, the tool hole being formed below the first functional part to communicate with and not to interfere with the first functional part.

2. The dental solid abutment according to claim 1, wherein the first function part has a structure in which an upper part of the post is cut and divided into a plurality of pieces.

3. The dental solid abutment according to claim 1, wherein a second functional part having a groove or a hole structure communicating with the first functional part is further formed on an outer surface of the post.

4. The dental solid abutment according to claim 3, wherein the tool hole is formed below the first functional part and the second functional part, when the second functional part has a hole structure.

5. The dental solid abutment according to claim 1, wherein the tool hole has a hexagonal, cross or star-shaped structure, and is formed to be spaced apart from a lower end portion of the first functional part by 1 mm to 2 mm.
